# EUROPEAN PATENT APPLICATION

(11) **EP 4 362 249 A1**
(43) Date of publication of application: **01.05.2024**
(21) Application number: 22204024.8
(22) Date of filing: 27.10.2022
(51) Int. Cl.: H02B 13/035

(54) **MEDIUM VOLTAGE CONNECTOR**

(71) Applicant: ABB SCHWEIZ AG, 5400 Baden (CH)
(72) Inventor: CLAUS, Oliver, 40885 Ratingen (DE)
(74) Representative: Maiwald GmbH

(57) **Abstract**

The present invention relates to a medium voltage connector, comprising:
- a flange leg; and
- a cone leg;
wherein the flange leg is connected to the cone leg;
wherein a central longitudinal axis of the flange leg is angled to a central longitudinal axis of the cone leg;
wherein the flange leg is configured to be connected to a part of a medium voltage switch gear;
wherein the cone leg comprises an outer cone connection; and
wherein an outer surface of the flange leg comprises an electroconductive coating and/or an outer surface of the cone leg comprises an electroconductive coating.

## Description

### FIELD OF THE INVENTION

The present invention relates to a medium voltage connector, and a medium voltage switchgear.

### BACKGROUND OF THE INVENTION

Medium voltage equipment can be connected to gas insulated medium voltage switchgear by inner or outer cone applications. The outer cone bushings are straight bushings that may be of different length with internal field control electrodes. Due to the kind of connectors available in the market the shape of the switchgear compartments for inner and outer cone applications must different.

Typically, the current path of outer cone cable bushings (also called connectors) is straight. To be able to connect the cable plugs from the front, the current path to which the outer cone bushing is electrically connected to has to be led below the bottom of the gas compartment or, depending on the use and design, behind the gas compartment. This can be done by means of elongating a part of the gas compartment in the back downwards or at the rear side backwards. Another design used is to flange a separate (gas) compartment to the bottom or the rear side of the gas compartment which requires additional bushings. At the same time current transformers must be mounted in the current path between the gas compartment and the cable plugs. This can be achieved by steel tubes which belong to the gas compartment and are fitted around the current path to hold the current transformers. Or this can be done by tubes that are fitted outside between two gas compartments to hold the current transformers. Inner cone cable connectors do not have the same space requirements as for outer cone cable connectors and therefore the shape of the compartment can be optimized differently to that for a compartment when outer cone connectors are used.

There is a need to address these issues.

### SUMMARY OF THE INVENTION

Therefore, it would be advantageous to provide a more compact outer cone connector.

The object of the present invention is solved with the subject matter of the independent claims, wherein further embodiments are incorporated in the dependent claims.

In a first aspect, there is provided a medium voltage connector, comprising:
- a flange leg; and
- a cone leg.

The flange leg is connected to the cone leg. A central longitudinal axis of the flange leg is angled to a central longitudinal axis of the cone leg. The flange leg is configured to be connected to a part of a medium voltage switchgear. The cone leg comprises an outer cone connection. An outer surface of the flange leg comprises an electroconductive coating and/or an outer surface of the cone leg comprises an electroconductive coating.

In an example, an outer surface of the flange leg comprises an electroconductive coating and an outer surface of the cone leg comprises an electroconductive coating.

In an example, the flange leg comprises one or more field control electrodes and/or wherein the cone leg comprises one or more field control electrodes.

In an example, the one or more field control electrodes of the flange leg are connected to the electroconductive coating on the outer surface of the flange leg and/or the one or more field control electrodes of the cone leg are connected to the electroconductive coating on the outer surface of the cone leg.

In an example, the one or more field control electrodes of the flange leg are configured for voltage signal detection and/or wherein the one or more field control electrodes of the cone leg are configured for voltage signal detection.

In an example, the outer cone connection of the cone leg is a C-type outer cone for cable connection.

In an example, the outer cone connection of the cone leg is a F-type outer cone for cable connection.

In an example, the cone leg is configured to accommodate a ring core current transformer.

In an example, the central longitudinal axis of the flange leg is angled to the central longitudinal axis of the cone leg at an angle of one of: 45 degrees, 50 degrees, 55 degrees, 60 degrees, 65 degrees, 70 degrees, 75 degrees, 80 degrees, 85 degrees, 90 degrees, 95 degrees, 100 degrees, 105 degrees, 110 degrees, 115 degrees, 120 degrees

In an example, the connector is an L shaped bushing.

In an example, the connector is rated for one of: 630A, 1250A, 2000A, 2500A.

In an example, a length of the flange leg is selected based on a required current rating of the connector.

In an example, a length of the cone leg is selected based on a required current rating of the connector.

In a second aspect, there is provided a medium voltage switchgear comprising at least one connector according to the first aspect or any of the examples relating to the first aspect.

In an example, each phase of the switchgear comprises a double connector arrangement.

In an example, the two connectors are arranged diagonally to one another.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an example of a medium voltage connector;
Fig. 2 shows an example of a medium voltage connector; and
Fig. 3 shows an example of a medium voltage connector.

### DETAILED DESCRIPTION OF EMBODIMENTS

A new medium voltage connector is now described. The new design is in effect an angle-shaped medium voltage connection device with an outer cone interface, that in one specific embodiment can be termed an L-Bushing.

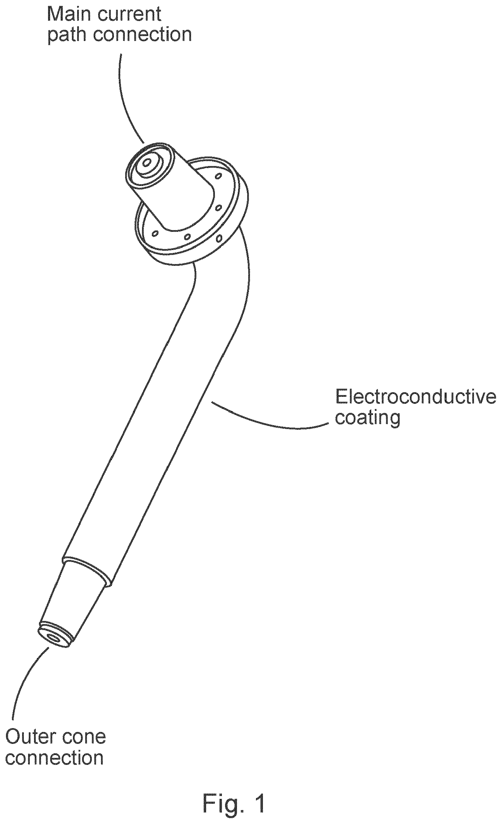

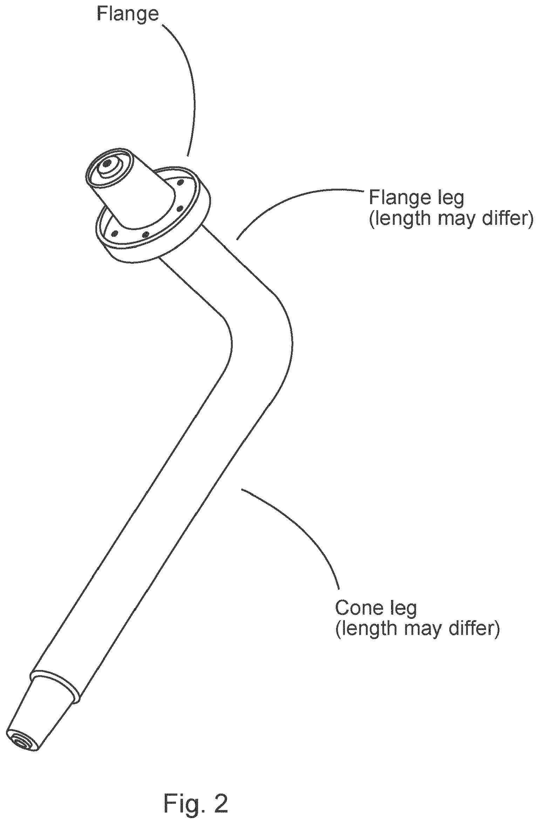

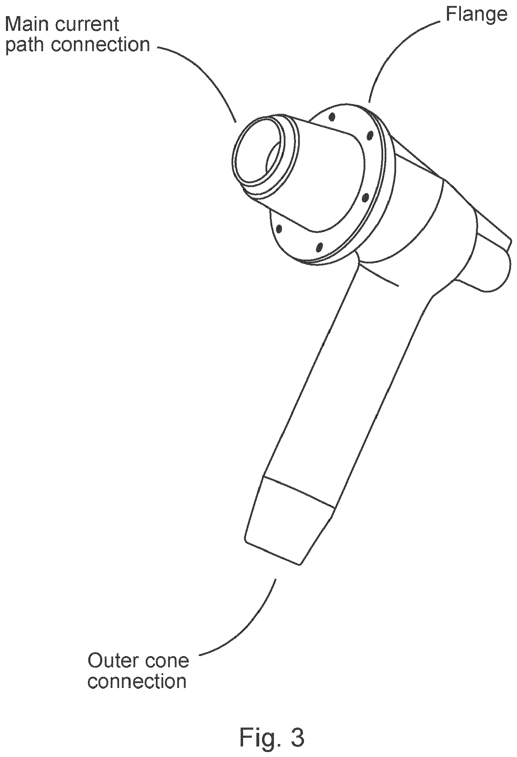

In an example, a medium voltage connector comprises a flange leg and a cone leg. The flange leg is connected to the cone leg. A central longitudinal axis of the flange leg is angled to a central longitudinal axis of the cone leg. The flange leg is configured to be connected to a part of a medium voltage switch gear. The cone leg comprises an outer cone connection. An outer surface of the flange leg comprises an electroconductive coating and/or an outer surface of the cone leg comprises an electroconductive coating. Specific embodiments of the connector, also termed an angled outer cone connection device or bushing, are shown in figs. 1, 2, and 3, where it is clearly shown that the flange leg is angled to the cone leg.

In this manner, outer cone connections can be utilized in a compact arrangement because the connector or bushing is angled, for example in an L form.

Furthermore, the total length of the connection device can be longer than present designs, the capacity of the field control electrodes for longer bushings can be tuned as required and is reduced compared to present designs, and due to the electroconductive coating on the outside of the bushing a higher dielectric strength can be achieved.

In an example, an outer surface of the flange leg comprises an electroconductive coating and an outer surface of the cone leg comprises an electroconductive coating.

In an example, the flange leg comprises one or more field control electrodes and/or the cone leg comprises one or more field control electrodes.

In an example, the flange leg comprises one or more field control electrodes and the cone leg comprises one or more field control electrodes.

In an example, the one or more field control electrodes of the flange leg are connected to the electroconductive coating on the outer surface of the flange leg and/or the one or more field control electrodes of the cone leg are connected to the electroconductive coating on the outer surface of the cone leg.

In an example, the one or more field control electrodes of the flange leg are connected to the electroconductive coating on the outer surface of the flange leg and the one or more field control electrodes of the cone leg are connected to the electroconductive coating on the outer surface of the cone leg.

In an example, the one or more field control electrodes of the flange leg are configured for voltage signal detection and/or the one or more field control electrodes of the cone leg are configured for voltage signal detection.

In an example, the one or more field control electrodes of the flange leg are configured for voltage signal detection and the one or more field control electrodes of the cone leg are configured for voltage signal detection.

In an example, the outer cone connection of the cone leg is a C-type outer cone for cable connection.

In an example, the outer cone connection of the cone leg is a F-type outer cone for cable connection.

In an example, the cone leg is configured to accommodate a ring core current transformer.

In an example, the central longitudinal axis of the flange leg is angled to the central longitudinal axis of the cone leg at an angle of one of: 45 degrees, 50 degrees, 55 degrees, 60 degrees, 65 degrees, 70 degrees, 75 degrees, 80 degrees, 85 degrees, 90 degrees, 95 degrees, 100 degrees, 105 degrees, 110 degrees, 115 degrees, 120 degrees.

Other angles are possible, depending upon design requirements.

In an example, the connector is an L shaped bushing.

In an example, the connector is rated for one of: 630A, 1250A, 2000A, 2500A.

In an example, the connector is rated for different currents, for example: 500A, 600A, 700A, 800A, 900A, 1000A, 1100A, 1200A, 1300A, 1400A, 1500A, 1600A, 1700A, 1800A, 1900A, 2100A. 2200A, 2300A, 2400A.

In an example, a length of the flange leg is selected based on a required current rating of the connector.

In an example, a length of the cone leg is selected based on a required current rating of the connector.

A medium voltage switchgear can have one or more of the above angled connectors or bushings. comprising at least one connector according to any of claims 1-12.

In an example, each phase of the switchgear comprises a double connector arrangement.

In this manner, by using two connectors or bushings per phase higher currents can be handled in a more compact form.

In an example, the two connectors are arranged diagonally to one another.

The angled connector is now described in specific detail.

The use of the new angled (e.g. L-type) shape for the outer cone connectors or bushings allows the use of the same gas compartments for inner and outer cone solutions.

By using double outer cone connections per phase gas, compartments for higher currents (above 1250 A, up to 2500 A) can be more compact. Outer cone connections are more cost efficient than inner cone connections and outer cone solutions up to 2500 A are not that common in the market, and the new design is also more compact.

By using L-shaped bushings the compartment for inner and outer cone connections can be the same. The length of each leg of the L-bushing can be varied in either way. Different L-shaped bushings or connectors are shown in Figs. 1, 2, and 3, but where the angle between the flange leg and the cone leg can be other than 90 degrees - in other words the reference here to an L-shaped connector or bushing relates only to one specific non-limiting example. To manage the increased length of the connectors/bushings a connector/bushing also includes one, two or more field control electrodes, that are either electrically connected with an electroconductive coating on the outside or used for voltage signal detection, and that are located distributed over the length of the bushing.

It is to be noted that in the case of a double bushing/connector solution for higher currents up to 2500A, the gas compartments can be kept very compact by using a second bushing with a longer leg to the flange (diagonal arrangement of the connections of one phase).

The use of field control electrodes that are connected with an electroconductive coating on the surface of the connection device leads to following advantages:
- The total length of the connection device can be longer than current designs.
- The capacity of the field control electrodes for longer bushings/connectors can be tuned as required and is reduced compared to present designs.
- Due to the electroconductive coating on the outside of the bushing/connector a higher dielectric strength can be achieved.

As shown in Figs. 1, 2, and 3 the new bushing/connector consists of two main design concepts: (1) an angled, L-type, shape of the bushing, and (2) field control electrodes in combination with electroconductive coating of the outside surface of the bushing.

The total distance of the main current path of the L-bushing is made longer compared to that of a conventional straight outer cone bushing, which causes problems with the conventional method of implementing field control electrodes. The use of field control electrodes, that can be smaller then current electrodes, which are connected to the electroconductive coating on the outside surface of the bushing/connector compensates for the disadvantages of the longer main current path of the L-bushing.

The concept of L-bushing/connector can be used for different applications such as cable bushings, busbar bushings or any other outer cone connection application.

The L-bushing/connector has two legs. One leg with the flange (flange-leg), that is fixed to the gas compartment, and one leg with the outer cone connection (cone-leg). The outer cone size can be adapted to the requirements, typically it will be C-type outer cone for cable connection, or an F-type outer cone for cable connection.

The cone-leg is used to accommodate the ring core current transformers.

The length of the flange-leg can be varied to generate different levels for connection of the outer cone devices.

The bushing can have different current ratings, such as 630 A, 1250 A, 2000 A or 2500 A.

A double bushing arrangement per phase can also be used to achieve higher current ratings, such as two times 1250 A to achieve a 2500 A connection.

With a double bushing/connector arrangement, a compact design of the gas tank can be kept by placing the second bushing diagonally offset in the compartment and elongating the flange-leg to generate a second level to connect the devices. This will reduce the width and therefore the footprint of the feeder compared to designs with straight bushings that are arranged sideways next to each other.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A medium voltage connector, comprising:
- a flange leg; and
- a cone leg;
wherein the flange leg is connected to the cone leg;
wherein a central longitudinal axis of the flange leg is angled to a central longitudinal axis of the cone leg;
wherein the flange leg is configured to be connected to a part of a medium voltage switch gear;
wherein the cone leg comprises an outer cone connection; and
wherein an outer surface of the flange leg comprises an electroconductive coating and/or an outer surface of the cone leg comprises an electroconductive coating.

2. Connector according to claim 1, wherein an outer surface of the flange leg comprises an electroconductive coating and an outer surface of the cone leg comprises an electroconductive coating.

3. Connector according to any of claims 1-2, wherein the flange leg comprises one or more field control electrodes and/or wherein the cone leg comprises one or more field control electrodes.

4. Connector according to claim 3, wherein the one or more field control electrodes of the flange leg are connected to the electroconductive coating on the outer surface of the flange leg and/or wherein the one or more field control electrodes of the cone leg are connected to the electroconductive coating on the outer surface of the cone leg.

5. Connector according to claim 3, wherein the one or more field control electrodes of the flange leg are configured for voltage signal detection and/or wherein the one or more field control electrodes of the cone leg are configured for voltage signal detection.

6. Connector according to any of claims 1-5, wherein the outer cone connection of the cone leg is a C-type outer cone for cable connection or a F-type outer cone for cable connection.

7. Connector according to any of claims 1-6, wherein the cone leg is configured to accommodate a ring core current transformer.

8. Connector according to any of claims 1-7, wherein the central longitudinal axis of the flange leg is angled to the central longitudinal axis of the cone leg at an angle of one of: 45 degrees, 50 degrees, 55 degrees, 60 degrees, 65 degrees, 70 degrees, 75 degrees, 80 degrees, 85 degrees, 90 degrees, 95 degrees, 100 degrees, 105 degrees, 110 degrees, 115 degrees, 120 degrees

9. Connector according to any of claims 1-8, wherein the connector is an L shaped bushing.

10. Connector according to any of claims 1-9, wherein the connector is rated for one of: 630A, 1250A, 2000A, 2500A.

11. Connector according to any of claims 1-10, wherein a length of the flange leg is selected based on a required current rating of the connector.

12. Connector according to any of claims 1-11, wherein a length of the cone leg is selected based on a required current rating of the connector.

13. A medium voltage switchgear comprising at least one connector according to any of claims 1-12.

14. Medium voltage switchgear according to claim 13, wherein each phase of the switchgear comprises a double connector arrangement.

15. Medium voltage switchgear according to claim 14, wherein the two connectors are arranged diagonally to one another.
